## Europäisches Patentamt

## European Patent Office

## Office européen des brevets

(19)

(11) Veröffentlichungsnummer: **0 175 011 B1**

(12) **EUROPÄISCHE PATENTSCHRIFT**

(45) Veröffentlichungstag der Patentschrift:
**27.01.88**

(51) Int. Cl.⁴: **B 23 B 29/034**, B 23 B 51/00

(21) Anmeldenummer: **84111108.1**

(22) Anmeldetag: **18.09.84**

(54) **Drehbares Zerspanungswerkzeug, insbesondere Ausbohrkopf od.dgl.**

(43) Veröffentlichungstag der Anmeldung:
**26.03.86 Patentblatt 86/13**

(45) Bekanntmachung des Hinweises auf die Patenterteilung:
**27.01.88 Patentblatt 88/4**

(84) Benannte Vertragsstaaten:
**AT BE CH DE FR GB IT LI NL SE**

(56) Entgegenhaltungen:
**GB - A - 1 549 215**
**US - A - 4 101 239**

(73) Patentinhaber: **J. Kühn GmbH & Co. Präzisionswerkzeug KG, Köhler Strasse 41, D-4270 Dorsten 11 (DE)**

(72) Erfinder: **Johne, Frank Ing. grad., Hopener Strasse 24, D-2842 Lohne (DE)**

(74) Vertreter: **Koscholke, Gotthold, Dr.-Ing., Rheinallee 147, D-4000 Düsseldorf 11 (DE)**

ACTORUM AG

## Beschreibung

Die Erfindung bezieht sich auf ein drehbares Zerspanungswerkzeug gemäss dem Oberbegriff des Anspruchs 1.

Es sind als sog. Zweischneider ausgebildete Bohrköpfe zum Auf- oder Ausbohren von Bohrungen bekannt z.B. aus der GB-A-1549215, bei denen zwei Schneidenträger auf einem Werkzeugkörper jeweils radial verstellbar und in der eingestellten Lage mit einer oder zwei Befestigungsschrauben festlegbar sind. Vielfach ist dabei die Auflage für den Schneidenträger am Werkzeugkörper mit einer Verzahnung versehen, in die eine entsprechende Verzahnung an der Unterseite des Schneidenträgers eingreift. Solche Auflagen für Schneidenträger weisen bei bekannten Ausführungen entweder an der Stirnseite eines Werkzeugkörpers eine gleiche Verzahnung für beide Schneidenträger auf oder es sind unter einem Winkel zueinander stehende verzahnte Auflagen vorhanden. Die Befestigungsschraube, die entweder ein Langloch im Schneidenträger durchgreift und in eine Bohrung im Werkzeugkörper eingeschraubt ist oder durch ein rundes Loch im Schneidenträger hindurchgeht und dann in eine im Werkzeugkörper verschiebbare Mutter eingreift, steht immer lotrecht zur verzahnten Auflage. Die Verzahnung hat in allen Fällen eine symmetrische Ausbildung, d.h. beide Flanken eines Zahnes stehen jeweils unter dem gleichen Winkel bezüglich einer Mittelebene.

Zusammen mit der Befestigungsschraube muss die Verzahnung die beim Zerspanungsvorgang auftretenden Kräfte vom Schneidenträger auf den Werkzeugkörper übertragen. Wie sich zeigt, treten dabei zum Teil erhebliche Kraftwirkungen auf, die den Schneidenträger aus der Verzahnung herauszuschieben suchen. Weiterhin ruft die Hauptschnittkraft oder die Resultierende aus den Zerspanungskräften, namentlich aus Hauptschnittkraft und Vorschubkraft, besonders bei mehr oder weniger weit radial nach aussen verstellten Schneidenträgern, eine Verbiegung des Schneidenträgers auf. Dies hat zur Folge, dass der Schneidenträger auf seiner Auflage nach oben wandert und bei nachlassender Kraft sofort wieder herunterfedert, was bei der Bearbeitung zu Rattererscheinungen führt.

Vielfach sind die Schneidenträger recht schmal, wobei dann eine durch die Haupfkraft hervorgerufene Kippung auftritt, die eine hohe Zugbelastung auf die Befestigungsschraube ausübt. Ist der Abstand der Schneidplatte von der Verschiebeebene des Schneidenträgers relativ gross, so muss bei den auftretenden Belastungen ein hohes Biegemoment von den Befestigungsschrauben aufgenommen werden. Solche hohen Momente können unter Umständen sogar zu einer Längung der Schrauben führen, was ein Lösen des Schneidenträgers und damit eine Zerstörung des Werkzeuges zur Folge haben kann. Die bestehenden beengten Platzverhältnisse bei Werkzeugen der betrachteten Art und Grenzen in der Werkstoffestigkeit sind wesentliche Hindernisse, die einer befriedigenden Lösung bisher entgegenstanden.

Aufgabe der Erfindung ist es, Nachteile und Unzulänglichkeiten zu überwinden und ein Werkzeug der eingangs genannten Art zu schaffen, bei dem die Festlegung eines verzahnten Schneidenträgers auf der verzahnten Auflage eines Werkzeugkörpers möglichst sicher erfolgen kann und günstige Kraftverhältnisse erreicht werden. Die Erfindung strebt dabei auch eine vorteilhafte Ausbildung des Werkzeuges im einzelnen an. Dies gilt zugleich für die Positionierung eines Schneidenträgers relativ zum Werkzeugkörper. Weitere mit alledem zusammenhängende Probleme, mit denen sich die Erfindung befasst, ergeben sich aus der Erläuterung der jeweils aufgezeigten Lösung.

Gemäss der Erfindung ist bei einem Werkzeug der erläuterten Gattung die Verzahnung der Auflage für den Schneidenträger sägezahnförmig mit steilen Zahnflanken und schrägen Zahnflanken ausgebildet, wobei die steilen Zahnflanken im wesentlichen auf der zum Schneidelement des aufgenommenen Schneidenträgers hin gerichteten Seite liegen.

Bei einer solchen Ausbildung ergeben sich durch die Sägezähne einwandfreie Widerlager für die Gegenzähne des Schneidenträgers bei der Einwirkung der Hauptschnittkraft bzw. einer aus den Schnittkräften resultierenden Kraft. Der Schneidenträger wird durch die Hauptschnittkraft fest in den Sitz gedrückt, den der Verzahnungseingriff bildet. Die Vorschubkraft unterstützt diese Wirkung. Erstreckt sich die Verzahnung der Auflage über die gesamte Breite des Werkzeugkörpers, wie es die Erfindung insbesondere vorsieht, ergibt sich eine zusätzliche Sicherheit. Weiterhin wird durch die Ausbildung und Anordnung der Verzahnung ein durch die Zerspanungskräfte etwa hervorgerufenes Kippmoment so klein gehalten, dass selbst eine Normschraube als Befestigungsschraube die dann noch auftretenden Belastungen mit grosser Sicherheit aushält.

Die steilen Zahnflanken der Verzahnung können lotrecht zur Grundebene der Auflage gerichtet sein. Mit besonderem Vorteil ist jedoch die Verzahnung an den steilen Zahnflanken hinterschnitten, d.h. diese stehen in einem von der Lotrechten abweichenden Winkel. Dieser Hinterschneidungswinkel lässt sich in verhältnismässig weiten Grenzen wählen. Er kann je nach der Ausführung sogar 10° und mehr betragen. Bei einer sehr zweckmässigen Ausführung liegt der Hinterschneidungswinkel in einem Bereich, der die über 0° liegenden Werte bis zu etwa 8° umfasst. Insbesondere beträgt der Hinterschneidungswinkel etwa 5°.

Durch eine Hinterschneidung an den steilen Flanken wird die sichere Aufnahme aller auftretenden Beanspruchungen noch zusätzlich begünstigt. Es ergibt sich dabei gewissermassen ein festes Verkrallen.

Der Neigungswinkel der schrägen Zahnflanken der Verzahnung bezüglich des Lotes auf die Grundebene der Auflage lässt sich weitgehend nach den jeweiligen Umständen wählen. Bevorzugte Werte für diesen Neigungswinkel liegen im Bereich von etwa 40° bis 50°. Insbesondere ist ein Neigungswinkel von etwa 45° von Vorteil.

Zweckmässig sind wenigstens bei einer der Verzahnungen, insbesondere aber bei beiden, die Zähne gekürzt, so dass keine Spitzen vorhanden sind, sondern die Zahnköpfe kleine Stirnflächen aufweisen.

Die Verzahnung am Schneidenträger braucht nicht unbedingt völlig identisch mit der Verzahnung der Auflage zu sein, wird aber zweckmässig zumindest im wesentlichen gleich der letzteren ausgebildet. Dies gilt nicht nur für die Winkel der Zahnflanken, sondern auch für andere Einzelheiten.

Das Werkzeug wird zweckmässig so gestaltet, dass sich die Auflage mit ihrer Verzahnung an einer quer zur Längsachse des Werkzeugkörpers gerichteten Stirnfläche des letzteren befindet, wie es an sich bekannt ist.

Handelt es sich um einen sog. Zweischneider, auf den die Erfindung besonders abzielt und bei dem zwei unabhängig voneinander in entgegengesetzten Richtungen radial einstellbare Schneidenträger vorhanden sind, besteht eine vorteilhafte Ausführung darin, dass an der Stirnseite des Werkzeugkörpers in zwei einander unmittelbar benachbarten Bereichen als Auflagen Verzahnungen mit entgegengesetzter Orientierung der Zahnflanken angeordnet sind. Damit ist die verfügbare Fläche optimal ausgenutzt und für jeden Schneidenträger trotzdem eine sichere Halterung mit günstiger Aufnahme der Beanspruchungskräfte erzielt.

Die Verzahnungen sind vorteilhaft durch Schleifen fertigbearbeitet bzw. sogar ganz durch Schleifen, insbesondere Tiefschleifen, erzeugt.

Eine vorteilhafte weitere Ausgestaltung des Werkzeuges, bei der eine Positionier- oder Feineinstellschraube im Schneidenträger vorhanden ist, besteht darin, dass auf einem zylindrischen Teil der Befestigungsschraube für den Schneidenträger eine Hülse sitzt, auf welche die quer dazu gerichtete Feineinstellschraube mit ihrem Ende sich abstützt. Die Hülse ist zweckmässig mit ihrem unteren Ende in eine Aufnahme im Werkzeugkörper eingefügt, die oberhalb des Gewindes zum Einschrauben der Befestigungsschraube vorgesehen ist. Das Langloch im Schneidenträger lässt sich ohne Schwierigkeiten so ausbilden, dass es Platz für die auf der Befestigungsschraube sitzende Hülse bietet.

Weitere Vorteile der Erfindung ergeben sich aus der nachstehenden Erläuterung von Ausführungsbeispielen und aus der zugehörigen Zeichnung. Es zeigen:

Fig. 1 ein Werkzeug gemäss der Erfindung in Seitenansicht, teilweise abgebrochen bzw. geschnitten gezeichnet,

Fig. 2 eine Draufsicht zu Fig. 1,

Fig. 3 eine andere Seitenansicht in Richtung des Pfeiles III in Fig. 1 auf den oberen Teil des Werkzeuges,

Fig. 4 einen vergrösserten Schnitt durch die Verzahnung bei einer Ausführungsform,

Fig. 5 einen entsprechenden Schnitt bei einer anderen Ausführungsform,

Fig. 6 eine schematische Darstellung des Eingriffs von Schneidenträger und Werkzeugkörper mit Veranschaulichung von Kraftwirkungen,

Fig. 7 eine weitere schematische Darstellung und

Fig. 8 die Veranschaulichung der Kraftverhältnisse bei einer vereinfachten Draufsicht.

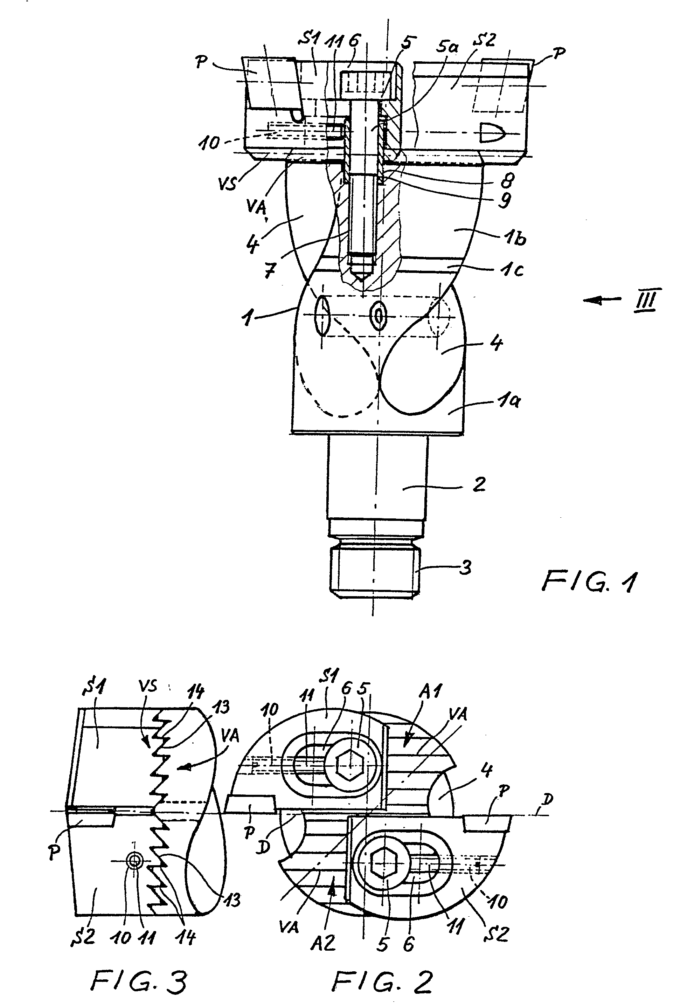

Das in den Fig. 1 bis 3 dargestellte Werkzeug ist ein sog. Zweischneider, d.h. ein Bohrkopf zum Innenbearbeiten von Bohrungen, beispielsweise für die Schruppbearbeitung. Ein insgesamt mit der Ziffer 1 bezeichneter Werkzeugkörper hat einen zylindrischen Ansatz 2 und einen Gewindeteil 3, mit denen er in eine Halterung, z.B. einen Aufnahmekörper eingesetzt und darin befestigt werden kann. Der Werkzeugkörper 1 selbst hat einen rückwärtigen zylindrischen Teil 1a und einen vorderen Teil 1b mit grösserem Durchmesser. Beide Teile sind in der Grundgestalt zylindrisch, wobei mit der Ziffer 1c der Übergang bezeichnet ist. Die vordere Stirnfläche des Werkzeugkörpers 1 weicht nur in sofern von der Kreisgestalt ab, als in diese zwei Spannuten 4 einmünden, die in vorteilhafter Weise schraubenförmig verlaufen und bis nahe an das hintere Ende des rückwärtigen Teiles 1a reichen.

Die Stirnseite des Werkzeugkörpers 1 ist durch eine in diesem Fall durch die Mitten der Mündungen der Spannuten 4 gehende Durchmesserlinie D in zwei einander unmittelbar benachbarte Bereiche geteilt, von denen jeder eine Auflage A1 und A2 für einen Schneidenträger S1 bzw. S2 bildet. Jeder Schneidenträger ist bei dieser Ausführung am Ende mit einer Schneidplatte P versehen, die in üblicher Weise befestigt sein kann, sei es durch Klemmen, Löten, mittels einer Schraube oder auf andere geeignete Weise. Dies ist im einzelnen nicht dargestellt. Stattdessen kann auch irgendein anderes Schneidelement an dem Schneidenträger vorgesehen sein.

Jeder Schneidenträger S1, S2 ist mit einer Befestigungsschraube 5 am Werkzeugkörper festlegbar. Die jeweilige Befestigungsschraube 5 durchgreift ein Langloch 6 im Schneidenträger und ist in ein Gewinde 7 im Werkzeugkörper 1 eingeschraubt. Am oberen Ende dieses Gewindes ist ein zylindrischer Sitz 8 für eine Hülse 9 vorgesehen, die einen zylindrischen Teil 5a der Schraube 5 umgibt. Quer zur Schraubenachse ist in einer Gewindebohrung 10 jedes Schneidenträgers S1 bzw. S2 eine Positionier- oder Feineinstellschraube 11 vorgesehen, die sich mit ihrem Ende an der Hülse 9 abstützt. Das Langloch 6 in jedem Schneidenträger ist so ausgebildet, dass es entsprechenden Platz für die Hülse 9 bietet. Der Schraubenkopf legt sich mit seiner Unterseite wie üblich auf eine das Langloch 6 umgebende Auflagefläche.

Jede Auflage A1 und A2 ist mit einer sägezahnförmigen Verzahnung VA versehen. Die Unterseiten der Schneidenträger S1 und S2 weisen entsprechende Verzahnungen VS auf, die beim Festlegen des Schneidenträgers auf der Auflage mittels der Befestigungsschraube in engen Eingriff miteinander kommen.

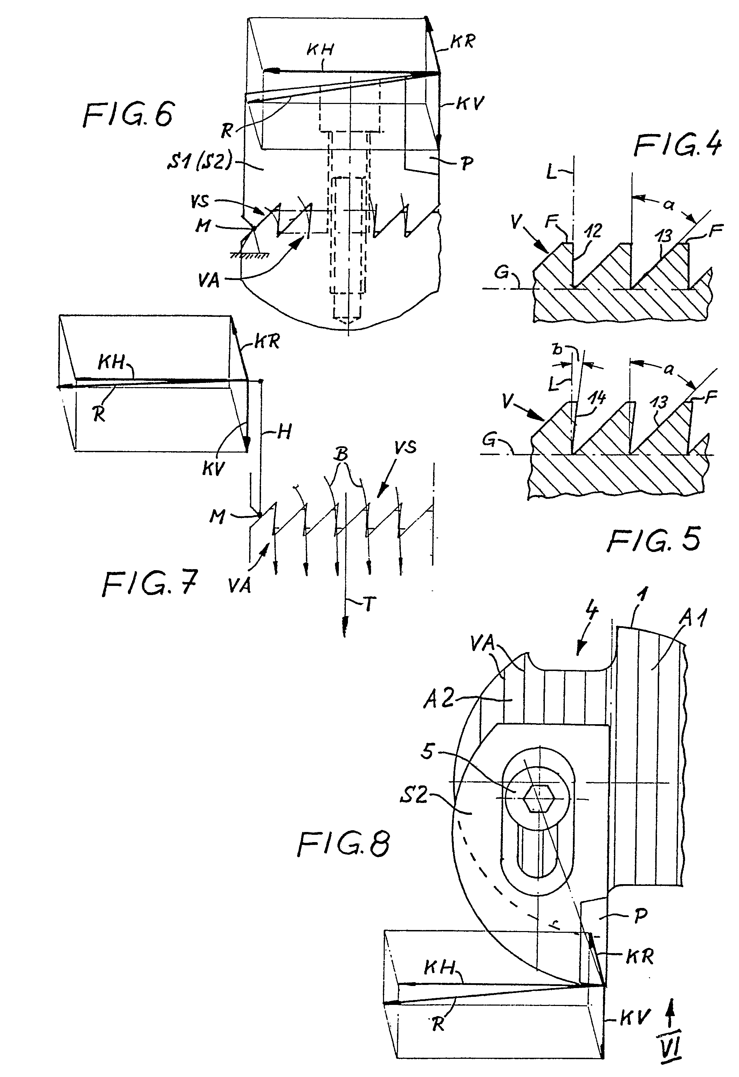

In Fig. 4 ist eine Ausführung der sägezahnförmigen Verzahnung V gezeigt, bei der die steilen Zahnflanken 12 lotrecht zu einer Grundebene G der Auflage gerichtet sind. Als Grundebene ist jede Ebene anzusehen, die durch gleiche Teile der Zähne verläuft oder eine dazu parallele Ebene. Die schrägen Zahnflanken 13 haben bei der Ausführung nach Fig. 4 mit Bezug auf eine lotrecht zur Grundebene G stehende Ebene L einen Neigungswinkel a von 45°.

Eine weitere Ausführung der Verzahnung V zeigt Fig. 5 in einer der Fig. 4 entsprechenden Darstellung. Hier ist die Verzahnung in vorteilhafter Weise hinterschnitten ausgebildet, in der Weise, dass die steilen Zahnflanken 14 mit der zur Grundebene G lotrechten Ebene L einen Hinterschnittwinkel b einschliessen, der namentlich im Bereich bis zu 8° liegt und vorteilhaft etwa 5° beträgt. Der Neigungswinkel a der schrägen Zahnflanken 14 kann wie bei der Ausführung nach Fig. 4 etwa 45° betragen oder aber auch einen anderen Wert haben.

Die Zähne sind jeweils gekürzt, so dass keine Spitzen, sondern kleine Stirnflächen F vorhanden sind (vgl. Fig. 4 u.5).

In den Fig. 6 bis 8 sind, teils schematisch, die Kraftverhältnisse bei einer hinterschnittenen Verzahnung der in Fig. 5 gezeigten Art veranschaulicht, wobei die Darstellungen in Fig. 6 und 7 etwa in Richtung des Pfeiles VI in Fig. 8 gesehen sind. Beim Zerspanungsvorgang wirken an der Schneidkante des Schneidelements P die Hauptschnittkraft KH, die Vorschubkraft KV und die Rückkraft KR. Die Resultierende aus diesen Kräften ist mit den Buchstaben R bezeichnet. Es zeigt sich, dass die Verzahnung VS des Schneidenträgers durch die auftretenden Kräfte in fester Anlage an der Verzahnung VA der Auflage gehalten bzw. sogar noch zusätzlich an diese angedrückt wird. Damit sind die Zerspanungskräfte selbst ausgenutzt, um dem Schneidenträger sicheren Halt zu verleihen.

Auch ein Kippmoment kann sich nicht schädlich auswirken. Der Punkt, um den der Schneidenträger kippen könnte, ist der äusserste Auflagepunkt des Schneidenträgers am Werkzeugträger, der in Fig. 6 und 7 mit M bezeichnet ist. In Fig. 7 ist das Kräfteparallelogramm im Vergleich zu Fig. 6 von der Schneidkante des Schneidelements P nach links verschoben, wobei die massgebende Kraft an einem Hebelarm H zum Angriff kommt. Bei einer durch ein solches Moment hervorgehobenen Schwenkung um den Punkt M müssten die einzelnen Teile der Verzahnung VS am Schneidelement Kreisbahnen beschreiben, wie sie in Fig. 7 angedeutet und mit dem Buchstaben B bezeichnet sind. Dies würde aber die steilen Zahnflanken noch fester aneinander pressen, die Zähne also praktisch ineinanderzwängen, so dass kein Kippen eintreten kann, welches zu nachteiligen Folgen führen könnte. Die Anzugskraft T der Befestigungsschraube 5 ist in der Lage, ohne Gefahr einer Biegung der letzteren ein Gegenmoment für die Kippkräfte aufzubringen.

## Patentansprüche

1. Drehbares Zerspanungswerkzeug, namentlich Ausbohrkopf od.dgl., mit einem Werkzeugkörper (1) und mit wenigstens einem ein Schneidelement (P) an einem Ende aufweisenden Schneidenträger (S1, S2), der mittels einer Befestigungsschraube (5) auf einer Auflage (A1, A2) des Werkzeugkörpers festspannbar ist, wobei die Auflage mit einer quer zur Längsachse des Werkzeugkörpers verlaufenden Verzahnung (VA) und der Schneidenträger an seiner Unterseite mit einer darin einfügbaren Verzahnung (VS) versehen sind, insbesondere sog. Zweischneiden mit zwei unabhängig voneinander radial verstellbaren Schneidenträgern, dadurch gekennzeichnet, dass die Verzahnung (VA) der Auflage (A1, A2) sägezahnförmig mit steilen Zahnflanken (12, 14) und schrägen Zahnflanken (13) ausgebildet ist und dass dabei die steilen Zahnflanken (12, 14) im wesentlichen auf der zum Schneidelement (P) des Schneidenträgers (S1, S2) hin gerichteten Seite der Verzahnung (VA) liegen.

2. Werkzeug nach Anspruch 1, dadurch gekennzeichnet, dass die steilen Zahnflanken (12) lotrecht zur Grundebene (G) der Auflage (A1, A2) gerichtet sind.

3. Werkzeug nach Anspruch 1, dadurch gekennzeichnet, dass die Verzahnung an den steilen Zahnflanken (14) hinterschnitten ist.

4. Werkzeug nach Anspruch 3, dadurch gekennzeichnet, dass der Hinterschneidungswinkel (b) bezüglich des Lotes (L) auf die Grundebene (G) der Auflage (A1, A2) im Bereich bis zu etwa 8° liegt.

5. Werkzeug nach einem der Ansprüche 3 und 4, dadurch gekennzeichnet, dass der Hinterschneidungswinkel (b) etwa 5° beträgt.

6. Werkzeug nach einem der Ansprüche 1 bis 5, dadurch gekennzeichnet, dass der Neigungswinkel (a) der schrägen Zahnflanken (13) bezüglich des Lotes (L) auf die Grundebene (G) der Auflage (A1, A2) im Bereich von etwa 40° bis 50° liegt.

7. Werkzeug nach Anspruch 6, dadurch gekennzeichnet, dass der Neigungswinkel (a) etwa 45° beträgt.

8. Werkzeug nach einem der Ansprüche 1 bis 7, dadurch gekennzeichnet, dass die Zähne wenigstens bei einer der Verzahnungen (VA, VS) gekürzt sind.

9. Werkzeug nach einem der Ansprüche 1 bis 8, dadurch gekennzeichnet, dass die Verzahnung (VS) am Schneidenträger (S1, S2) im wesentlichen gleich der Verzahnung (VA) der Auflage (A1, A2) ausgebildet ist.

10. Werkzeug nach einem der Ansprüche 1 bis 9, dadurch gekennzeichnet, dass sich die Auflage (A1, A2) mit ihrer Verzahnung (VA) über die ganze Breite des Werkzeugkörpers (1) erstreckt.

11. Werkzeug nach einem der Ansprüche 1 bis 10, dadurch gekennzeichnet, dass die Auflage (A1, A2) mit ihrer Verzahnung (VA) in an sich bekannter Weise an einer quer zur Längsachse des Werkzeugkörpers (1) gerichteten Stirnfläche des letzteren vorgesehen ist.

12. Werkzeug nach Anspruch 11, dadurch gekennzeichnet, dass an der Stirnseite des Werkzeugkörpers (1) in zwei einander unmittelbar benachbarten Bereichen als Auflagen (A1, A2) Verzahnungen (VA) mit entgegengesetzter Orientierung der Zahnflanken (12, 14; 13) für zwei in an sich bekannter Weise radial einstellbare Schneidenträger (S1, S2) vorgesehen sind.

13. Werkzeug nach einem der Ansprüche 1 bis 12, dadurch gekennzeichnet, dass die Verzahnungen (VA, VS) durch Schleifen bearbeitet sind.

14. Werkzeug nach einem der Ansprüche 1 bis 13 mit einer Feineinstellschraube im Schneidenträger, dadurch gekennzeichnet, dass auf einem zylindrischen Teil (5a) der Befestigungsschraube (5) für den Schneidenträger (S1, S2) eine Hülse (9) sitzt, an deren Aussenseite die quer dazu gerichtete Feineinstellschraube (11) angreift.

## Claims

1. A rotary cutting tool, in particular a counterboring head or the like with a tool member (1) and with at least one blade holder (S1, S2) which has a cutting element (P) at one end and can be clamped on a support (A1, A2) of the tool member by means of a fixing screw (5), wherein the support is provided with teeth (VA) running transversely to the longitudinal axis of the tool member and the blade holder is provided on its underside with teeth (VS) which can be inserted therein, in particular so-called double cutter with two blade holders which are radially adjustable independently of one another, characterised in that the teeth (VA) of the support (A1, A2) are saw-tooth shaped with steep tooth flanks (12, 14) and oblique tooth flanks (13) and that the steep tooth flanks (12, 14) lie substantially on the side of the teeth (VA) directed towards the cutting element (P) of the blade holder (S1, S2).

2. A tool according to claim 1, characterised in that the steep tooth flanks (12) are directed perpendicularly to the base plane (G) of the support (A1, A2).

3. A tool according to claim 1, characterised in that the teeth are undercut at the steep tooth flanks (14).

4. A tool according to claim 3, characterised in that the undercut angle (b) lies in the range of up to about 8° with respect to the normal (L) to the base plane (G) of the support (A1, A2).

5. A tool according to one of claims 3 and 4, characterised in that the undercut angle (b) is about 5°.

6. A tool according to one of claims 1 to 5, characterised in that the angle of inclination (a) between the oblique tooth flanks (13) and the normal (L) to the base plane (G) of the support (A1, A2) lies in the range of about 40° to 50°.

7. A tool according to claim 6, characterised in that the angle of inclination (a) is about 45°.

8. A tool according to one of claims 1 to 7, characterised in that the teeth are shortened at least in one set of teeth (VA, VS).

9. A tool according to one of claims 1 to 8, characterised in that the teeth (VS) on the blade holder (S1, S2) are substantially identical in design to the teeth (VA) on the support (A1, A2).

10. A tool according to one of claims 1 to 9, characterised in that the support (A1, A2) extends with its teeth (VA) over the entire width of the tool member (1).

11. A tool according to one of claims 1 to 10, characterised in that the support (A1, A2) with its teeth (VA) is provided in known manner on an end face of the tool member (1) directed transversely to the longitudinal axis of the tool member (1).

12. A tool according to claim 11, characterised in that teeth (VA) with opposing orientation of the tooth flanks (12, 14; 13) are provided for two blade holders (S1, S2) which are radially ajustable in known manner on the end face of the tool member (1) in two regions which are directly adjacent to one another as supports (A1, A2).

13. A tool according to one of claims 1 to 12, characterised in that the teeth (VA, VS) are machined by grinding.

14. A tool according to one of claims 1 to 13 with a precision adjusting screw in the blade holder, characterised in that a tube (9), on whose exterior there acts the precision adjusting screw (11) directed transversely thereto, rests on a cylindrical portion (5a) of the fixing screw (5) for the blade holder (S1, S2).

## Revendications

1. Outil de coupe rotatif, tel qu'une tête d'alésage ou analogue, comprenant un corps d'outil (1) et au moins un porte-plaquette (S1, S2) qui comporte à une extrémité une plaquette de coupe (P) et qui peut être immobilisé par serrage sur un appui (A1, A2) du corps d'outil à l'aide d'une vis de fixation (5), l'appui offrant une denture (VA) qui s'étend transversalement à l'axe longitudinal du corps d'outil, tandis que le porte-plaquette offre sur sa face inférieure une denture (VS) pouvant s'emboîter dans la première, notamment tête dite à deux arêtes de coupe qui comporte deux porte-plaquette réglables indépendamment l'un de l'autre en position radiale, caractérisé en ce que la denture (VA) de l'appui (A1, A2) est en dents de scie, avec des flancs de dent (12, 14) à pente raide et des flancs de dent (13) inclinés, et en ce que les flancs de dent (12, 14) à pente raide sont essentiellement situés sur le côté de la denture (VA) qui est tourné vers la plaquette de coupe (P) du porte-plaquette (S1, S2).

2. Outil selon la revendication 1, caractérisé en ce que les flans de dent (12) à pente raide sont dirigés perpendiculairement au plan de base (G) de l'appui (A1, A2).

3. Outil selon la revendication 1, caractérisé en ce que la denture est en contre-dépouille pour ses flancs de dent (14) à pente raide.

4. Outil selon la revendication 3, caractérisé en ce que l'angle de contre-dépouille (b) se trouve dans la gamme allant jusqu'à environ 8° par rapport à la perpendiculaire (L) au plan de base (G) de l'appui (A1, A2).

5. Outil selon une des revendications 3 et 4, caractérisé en ce que l'angle de contre-dépouille (b) s'élève à environ 5°.

6. Outil selon une des revendications 1 à 5, caractérisé en ce que l'angle d'inclinaison (a) des flancs de dent (13) inclinés se trouve dans la gamme d'environ 40° à 50° par rapport à la perpendiculaire (L) au plan de base (G) de l'appui (A1, A2).

7. Outil selon la revendication 6, caractérisé en ce que l'angle d'inclinaison (a) s'élève à environ 45°.

8. Outil selon une des revendications 1 à 7, caractérisé en ce que les dents sont tronquées au moins pour l'une des dentures (VA, VS).

9. Outil selon une des revendications 1 à 8, caractérisé en ce que la denture (VS) prévue sur le porte-plaquette (S1, S2) est sensiblement identique à la denture (VA) de l'appui (A1, A2).

10. Outil selon une des revendications 1 à 9, caractérisé en ce que l'appui (A1, A2) et sa denture (VA) s'étendent sur toute la largeur du corps d'outil (1).

11. Outil selon une des revendications 1 à 10, caractérisé en ce que l'appui (A1, A2) et sa denture (VA) sont prévus, d'une manière connue en soi, sur une surface frontale du corps d'outil (1) qui est orientée transversalement à l'axe longitudinal de ce dernier.

12. Outil selon la revendication 11, caractérisé en ce qu'il est prévu, sur la face frontale du corps d'outil (1) et suivant deux zones directement adjacentes l'une à l'autre et servant d'appuis (A1, A2), des dentures (VA) présentant une orientation opposée pour les flancs (12, 14; 13) de leurs dents et destinées à deux porte-plaquette (S1, S2) qui sont réglables radialement d'une manière connue en soi.

13. Outil selon l'une des revendications 1 à 12, caractérisé en ce que les dentures (VA; VS) sont taillées par rectification.

14. Outil selon l'une des revendications 1 à 13 et comportant une vis de réglage fin dans son porte-plaquette, caractérisé en ce qu'une partie cylindrique (5a) de la vis de fixation (5) du porte-plaquette (S1, S2) sert d'appui à un manchon (9) dont la face extérieure est attaquée par la vis de réglage fin (11) qui est orientée transversalement à elle.

FIG. 1

FIG. 3

FIG. 2

0 175 011

*FIG. 6*

KH
KR
KV
R
P
S1 (S2)
VS
M
VA

*FIG. 4*

L
V
F
F
12
13
α
G

*FIG. 5*

b
L
V
14
13
α
F
G

KR
KH
R
H
KV
M

*FIG. 7*

B
VS
VA
T

*FIG. 8*

VA
4
1
A1
A2
5
S2
P
KR
KH
R
KV
VI
9